# EUROPÄISCHE PATENTSCHRIFT

(11) **EP 2 476 157 B1**
(45) Veröffentlichungstag und Bekanntmachung des Hinweises auf die Patenterteilung: **09.10.2013**
(21) Anmeldenummer: 10749798.4
(22) Anmeldetag: 27.08.2010
(51) Int. Cl.: H01M 10/42, H01M 10/0525, H01M 10/0567

(54) **ADDITIV FÜR ELEKTROLYTE IN ELEKTROCHEMISCHEN ZELLEN**
ADDITIVE FOR ELECTROLYTES IN ELECTROCHEMICAL CELLS
ADDITIF POUR ÉLECTROLYTES DANS DES CELLULES ÉLECTROCHIMIQUES

(30) Priorität: 08.09.2009 DE 102009040562
(43) Veröffentlichungstag der Anmeldung: 18.07.2012
(73) Patentinhaber: Li-tec Battery GmbH, 01917 Kamenz (DE)
(72) Erfinder: PILGRAM, Peter, 01109 Dresden (DE); TERWONNE, Rolf-Walter, 45772 Marl (DE); THIEMIG, Denny, 01326 Dresden (DE); KAISER, Joerg, 76344 Eggenstein (DE); GUTSCH, Andreas, 59348 Luedinghausen (DE)
(74) Vertreter: Wallinger, Michael
(86) Internationale Anmeldenummer: PCT/EP2010/005290
(87) Internationale Veröffentlichungsnummer: WO 2011/029534

(56) Entgegenhaltungen:
- WO-A1-2008/133207
- JP-A- 8 078 053
- JP-A- 9 306 472
- JP-A- 10 125 307
- JP-A- 11 185 804
- JP-A- 2002 042 864

## Beschreibung

Die Erfindung betrifft die Verwendung von Additiven, mit denen ein reduzierte Wasser- und Säuregehalt in einer elektrochemischen Zelle erreicht wird.

Die Anwendungsgebiete von Lithium-Ionen-Batterien, insbesondere von wiederaufladbaren Lithium-Ionen-Batterien und Lithium-Ionen-Akkumulatoren, reichen von hochwertigen Elektronikgeräten wie Mobiltelefonen und Camcordern bis hin zu Kraftfahrzeugen mit Elektroantrieb oder Hybridantrieb.

Diese Batterien oder Akkumulatoren, im Folgenden allgemein als elektrochemische Zelle bezeichnet, sind aus Kathode, Anode, Separator und einem nichtwässrigen Elektrolyt aufgebaut. Als Kathode werden typischerweise Lithiummanganate, -kobaltate und -nickelate, auch in Form der gemischten Oxide, oder andere Lithium-Interkalations- und Insertions-Verbindungen verwendet. Als Anode können Lithium-Metall, verschiedene Kohlenstoff-Typen, Graphit, graphitische Kohlenstoffe sowie Lithium-Interkalations- und Insertions-Verbindungen wie Lithiumtitanat oder Legierungen eingesetzt werden. Als Elektrolyt kommen Lösungen von anorganischen und organischen Lithiumsalzen, den Leitsalzen, in aprotischen Lösungsmitteln zum Einsatz. Geeignete Leitsalze sind beispielsweise LiPF₆, LiBF₄, LiClO₄, LiAsF₆, LiCF₃SO₃, LiN(CF₃SO₂)₂ oder LiC(CF₃SO₂)₃ und deren Mischungen. Aprotische Lösungsmittel sind typischerweise Ethylencarbonat, Propylencarbonat, Butylencarbonat, Dimethylcarbonat, Diethylcarbonat, Ethylmethylcarbonat, Methylpropycarbonat, Butylmethylcarbonat, Ethylpropyl-carbonat, Dipropylcarbonat, Cyclopentanone, Sulfolane, Dimethylsulfoxid, 3-Methyl-1,3-oxazolidine-2-on, γ-Butyrolacton, 1,2-Diethoxymethan, Tetrahydrofu-ran, 2-Methyltetrahydrofuran, 1,3-Dioxolan, Methylacetat, Ethylacetat, und deren Mischungen.

Aufgrund der Hydrolysempfindlichkeit gegenüber Wasser und anderen protischen Verunreinigungen der in Lithium-Ionen-Batterien eingesetzten Leitsalze, häufig Fluorid-haltige Leitsalze, besitzen diese Elektrolyte einen messbaren Gehalt an Säure wie beispielsweise Flusssäure. Hinzu kommt häufig ein herstellungsbedingter Flusssäure-Gehalt von ungefähr 50 ppm oder mehr im Elektrolyten. Außerdem kann durch thermische Belastung des Systems gleichfalls Säure gebildet werden.

Die heutzutage in Lithium-Ionen-Zellen verbauten Materialien für Separatoren, Elektroden und Elektrolyt reagieren bereits auf Spuren von Wasser im Bereich von einigen 10 ppm empfindlich und mit einer beschleunigten Alterung. So kann erzeugte Flusssäure mit verschiedenen Komponenten der elektrochemischen Zelle reagieren, wobei Korrosion eintreten oder unter elektrochemischen Bedingungen sogar Knallgas gebildet werden kann. Dabei kann es zum Herauslösen von Metallen aus den Aktivmaterialien der Elektroden bzw. zum unerwünschten Druckanstieg in der Zelle kommen. Derartige Reaktionen sind in elektrochemischen Zellen unerwünscht, da sie deren Eigenschaften negativ beeinflussen.

Ferner kann auch die auf den Elektroden befindliche Deckschicht beeinträchtigt werden. Beispielsweise befinden sich auf Graphitelektroden üblicherweise Deckschichten aus Alkylcarbonaten, Lithiumcarbonaten, Lithiumhydroxiden und Lithiumoxiden, wobei Flusssäure mit dieser Deckschicht reagieren kann. Dabei kann es zum Abbau der Carbonat-Deckschicht und zum Aufbau eines Lithiumfluorid-Films kommen. Dieser ist im Gegensatz zu der ursprünglichen Deckschicht nicht oder nur schlecht durchlässig für Li-Ionen. Damit nimmt die Impedanz der elektrochemischen Zelle in unerwünschter Weise zu.

Aus der DE 100 27 626 A1 ist bekannt, gebildete Flusssäure durch Zugabe von Additiven abzufangen und damit die Bildung des LiF-Films zu verhindern. Beispielsweise kann Tributylamin als Säurefänger zugesetzt werden. Es ist aber auch möglich, spezielle Silane einzusetzen, die durch ihre Lösungseigenschaften für Lithiumfluorid die Ausbildung eines LiF-Films verhindern. Auch aus der WO 2008/133207 A1 sind Additive für elektrochemischen Zellen bekannt. Aufgabe der vorliegenden Erfindung ist es, Additive zur Verfügung zu stellen, die in Elektrolyten für elektrochemische Zellen den Wassergehalt weiter reduzieren und damit der Bildung von Säure entgegenwirken bzw. bereits vorhandene Säure abfangen, also die Eigenschaften der Zelle verbessern.

Es wurde gefunden, dass Verbindungen, die ein protonierbares Stickstoffatom, also eine Basenfunktion enthalten, und die hydrolisierbar sind, die gestellte Aufgabe lösen. Durch die Hydrolysereaktion wird ein im Elektrolyt vorhandener Wassergehalt reduziert. Die Basenfunktion wirkt als Säurefänger. Dementsprechend kann bei Verwendung einer derartigen Verbindung in einem Elektrolyt für eine elektrochemische Zelle die Bildung von Säure, insbesondere Flusssäure, minimiert sowie die Ausbildung eines LiF-Films auf den Elektroden der elektrochemischen Zelle weitgehend unterdrückt werden. Damit kann die Impedanz der Zelle stabilisiert werden.

Die Erfindung betrifft die in Anspruch 1 genannte Verwendung einer Siliziumverbindung, die ein protonierbares Stickstoffatom enthält und durch Wasser hydroliyierbar ist, als Additiv zum Binden von Wasser und Säure in einer elektrochemischen Zelle.

Vorzugsweise wird das Additiv in einem Elektrolyt, der ein in einem aprotischen Lösungsmittel gelöstes Lithium-haltiges anorganisches Leitsalz oder Lithium-haltiges organisches Leitsalz umfasst, eingesetzt.

Das Additiv liegt vorzugsweise in gelöster Form im Elektrolyten vor, der üblicherweise in elektrochemischen Zellen, bevorzugt wiederaufladbaren Lithium-Ionen-Batterien, eingesetzt wird.

Das im Elektrolyt vorliegende aprotische Lösungsmittel ist vorzugsweise ein Lösungsmittel wie oben im Stand der Technik beschrieben, also vorzugsweise ausgewählt aus der Gruppe bestehend aus Ethylencarbonat, Propylencarbonat, Butylencarbonat, Dimethylcarbonat, Diethylcarbonat, Ethylmethylcarbonat, Methylpropycarbonat, Butylmethylcarbonat, Ethylpropylcarbonat, Dipropylcarbonat, Cyclopentanone, Sulfolane, Dimethylsufoxid, 3-Methyl-1,3-oxazolidine-2-on, γ-Butyrolacton, 1,2-Diethoxymethan, Tetrahydrofuran, 2-Methyltetrahydrofuran, 1,3-Dioxolan, Methylacetat, Ethylacetat, und Mischungen aus zwei oder mehr dieser aprotischen Lösungsmittel.

Die als Leitsalze verwendeten Verbindungen sind vorzugsweise die anorganischen und organischen Lithiumverbindungen wie sie oben im Stand der Technik beschrieben sind, also vorzugsweise ausgewählt aus der Gruppe bestehend aus LiPF₆, LiBF₄, LiClO₄, LiAsF₆, LiCF₃SO₃, LiN(CF₃SO₂)₂ oder LiC(CF₃SO₂)₃ sowie LiSO₃CₓF₂ₓ₊₁, LiN(SO₂CₓF_{2X+1})₂ oder LiC(SO₂CₓF₂ₓ₊₁)₃ mit 0 ≤ x ≤ 8, und Mischungen von zwei oder mehreren dieser Leitsalze.

Erfindungsgemäß können im Additiv oder als Additiv alle Siliziumverbindungen eingesetzt werden, die ein protonierbares Stickstoffatom aufweisen, und welche durch Wasser hydrolisiert oder zumindest teilweise hydrolisiert werden. Unter den Betriebsbedingungen der Zelle soll besagte Verbindung bzw. die aus ihr durch Hydrolyse und gegebenenfalls Protonierung entstandene Folgeverbindung oder Folgeverbindungen jedoch eine ausreichend hohe elektrochemische Stabilität besitzen, d.h. sie soll durch die elektrochemische Reaktion nicht zersetzt werden.

Das protonierbare Stickstoffatom kann Teil einer primären, einer sekundären oder einer tertiären Aminogruppe sein.

Erfindungsgemäß ist die Verbindung, die ein protonierbares Stickstoffatom enthält und durch Wasser hydrolisiert wird, eine Siliziumverbindung.

Vorzugsweise enthält die Siliziumverbindung eine Silizium-Sauerstoff-Bindung, die unter Einwirkung von Wasser gespalten wird, d.h. hydrolisiert wird. Es ist bekannt, dass beispielsweise entsprechende Alkoxyverbindungen durch Wasser leicht hydrolytisch gespalten werden können.

Besonders bevorzugt ist auch eine Siliziumverbindung, welche eine hydrolisierbare Silizium-Sauerstoff-Bindung enthält, wobei das protonierbare Stickstoffatom Teil einer primären, einer sekundären oder einer tertiären Aminogruppe ist.

In einer bevorzugten Ausführungsform weist die Siliziumverbindung das Strukturelement R₁-Si-OR₂ auf, wobei R₁ ein Alkylrest mit 1 bis 12 Kohlenstoffatomen ist, vorzugsweise mit 1 bis 6 Kohlenstoffatomen, wobei der Alkylrest mit einer Aminogruppe substituiert ist. R₂ ist ein Alkylrest mit 1 bis 12 Kohlenstoffatomen ist, vorzugsweise mit 1 bis 6 Kohlenstoffatomen, oder ein aromatischer Rest (Arylrest). Ein aromatischer Rest ist vorzugsweise der Phenylrest.

In einer weiteren bevorzugten Ausführungsform weist die Siliziumverbindung die Formel Ri-Si(-OR₂) (-R₃) (-R₄) auf, wobei R₁ und R₂ die oben angegebene Bedeutung besitzen. R₃ und R₄ sind unabhängig voneinander Alkylreste mit 1 bis 12 Kohlenstoffatomen, vorzugsweise 1 bis 6 Kohlenstoffatomen, oder Alkoxyreste mit 1 bis 12 Kohlenstoffatomen, vorzugsweise 1 bis 6 Kohlenstoffatomen, oder aromatische Reste, vorzugsweise Phenylreste, oder Aryloxyreste, vorzugsweise Phenoxyreste.

Vorzugsweise ist die Siliziumverbindung ein (Aminoalkyl)-trialkoxysilan.

Vorzugsweise weist die Siliziumverbindung dann die Formel R₁-Si(-OR₂) (-OR₅) (-OR₆) auf, wobei R₁ die oben angegebene Bedeutung besitzt, und R₂, R₅ und R₆ unabhängig voneinander Alkylreste mit 1 bis 12 Kohlenstoffatomen, vorzugsweise mit 1 bis 6 Kohlenstoffatomen, sind.

Geeignete Verbindungen sind vorzugsweise (2-Aminoethyl)-trimethoxysilan, (2-Aminoethyl)-triethoxysilan, ein (2-Aminoethyl)-tripropoxysilan, ein (2-Aminoethyl)-tributoxysilan, (3-Aminopropyl)-trimethoxysilan, (3-Aminopropyl)-triethoxysilan, ein (3-Aminopropyl)-tripropoxysilan, ein (3-Aminopropyl)-tributoxysilan.

In einer besonders bevorzugten Ausführungsform ist die Siliziumverbindung (3-Aminopropyl)-triethoxysilan oder (3-Aminopropyl)-trimethoxysilan.

Besonders bevorzugt wird als Siliziumverbindung (3-Aminopropyl)-triethoxysilan (CAS-Nr. 919-30-2) eingesetzt.

Diese genannten Aminosilane können auch in einer Form eingesetzt werden, in der die primäre Aminogruppe weiter alkyliert vorliegt, also in Form einer sekundären oder tertiären Aminogruppe.

Die obigen Siliziumverbindungen sind bekannt oder können nach bekannten Methoden hergestellt werden.

Die Verbindungen können als Additiv einem in einer elektrochemischen Zelle verwendeten Elektrolyten in einer Konzentration von 0,01 bis 10 Gew.-% bezogen auf alle im Elektrolyt enthalten Substanzen zugesetzt werden. Vorzugsweise liegt das Additiv in einer Konzentration von 0,1 bis 5 Gew.-% vor.

Die als oder im Additiv eingesetzten Aminosilanverbindungen zeichnen sich durch eine gute elektrochemische Stabilität aus. Es wurde gefunden, dass ihre Oxidationsstabilität im Allgemeinen ausreichend hoch für den Einsatz in elektrochemischen Zellen, bevorzugt in Lithium-Ionen-Batterien, ist.

## Patentansprüche

1. Verwendung einer Siliziumverbindung, die ein protonierbares Stickstoffatom enthält und durch Wasser hydrolisierbar ist, zum Binden von Wasser und Säure in einer elektrochemischen Zelle, die eine Kathode, eine Anode, einen Separator und einen Elektrolyt umfasst, wobei der Elektrolyt ein aprotisches Lösungsmittel und ein Lithiumsalz als Leitsalz umfasst.

2. Verwendung nach Anspruch 1, **dadurch gekennzeichnet, dass** die Siliziumverbindung das Strukturelement R1-Si-OR2 aufweist, wobei R1 ein Alkylrest mit 1 bis 12 Kohlenstoffatomen ist, der mit einer Aminogruppe substituiert ist, und R2 ein Alkylrest mit 1 bis 12 Kohlenstoffatomen ist, oder ein aromatischer Rest ist.

3. Verwendung nach Anspruch 1 oder 2, **dadurch gekennzeichnet, dass** die Siliziumverbindung die Formel R1-Si(-OR2) (-R3) (-R4) aufweist, wobei R1 und R2 die oben angegebene Bedeutung besitzen, und R3 und R4 unabhängig voneinander Alkylreste mit 1 bis 12 Kohlenstoffatomen, oder Alkoxyreste mit 1 bis 12 Kohlenstoffatomen, oder aromatische Reste, oder Aryloxyreste sind.

4. Verwendung nach einem der Ansprüche 1 oder 3, **dadurch gekennzeichnet, dass** die Siliziumverbindung ein (Aminoalkyl)-trialkoxysilan ist.

5. Verwendung nach Anspruch 4, **dadurch gekennzeichnet, dass** R2 ein Alkylrest mit 1 bis 12 Kohlenstoffatomen und R3 und R4 Alkoxyreste mit 1 bis 12 Kohlenstoff-atomen sind.

6. Verwendung nach einem der Ansprüche 1 bis 5, **dadurch gekennzeichnet, dass** die Siliziumverbindung ausgewählt ist aus der Gruppe bestehend aus (2-Aminoethyl)-trimethoxysilan, (2-Aminoethyl)-triethoxysilan, (2-Aminoethyl)-tripropoxysilan, (2-Aminoethyl)-tributoxysilan, (3-Aminopropyl)-trimethoxysilan, (3-Aminopropyl)-triethoxysilan, (3-Aminopropyl)-tripropoxysilan, (3-Aminopropyl)-tributoxysilan.

7. Verwendung nach einem der Ansprüche 1 bis 6, wobei die Siliziumverbindung (3-Aminopropyl)-triethoxysilan oder (3-Aminopropyl)-trimethoxysilan ist.

8. Verwendung nach einem der vorstehenden Ansprüche, **dadurch gekennzeichnet, dass** das protonierbare Stickstoffatom Teil einer primären, einer sekundären oder einer tertiären Aminogruppe ist.

9. Verwendung nach einem der vorstehenden Ansprüche, **dadurch gekennzeichnet, dass** die Verbindung in einer Konzentration von 0,01 bis 10 Gew.-% im Elektrolyt enthalten ist.

10. Verwendung nach Anspruch 9, **dadurch gekennzeichnet, dass** die Verbindung in einer Konzentration von 0,1 bis 5 Gew.-% im Elektrolyt enthalten ist.

11. Verwendung nach einem der vorstehenden Ansprüche, **dadurch gekennzeichnet, dass** das Leitsalz ausgewählt ist aus der Gruppe bestehend aus LiPF₆, LiBF₄, LiClO₄, LiAsF₆, LiCF₃SO₃, LiN(CF₃SO₂)₂ oder LiC(CF₃SO₂)₃ sowie LiSO₃CₓF₂ₓ₊₁, LiN(SO₂CₓF₂ₓ₊₁)₂ oder LiC(SO₂CₓF₂ₓ₊₁)₃ mit 0 ≤ x ≤ 8, und Mischungen von zwei oder mehreren dieser Leitsalze.

12. Verwendung nach einem der vorstehenden Ansprüche, **dadurch gekennzeichnet, dass** das Lösungsmittel ausgewählt ist aus der Gruppe bestehend aus Ethylencarbonat, Propylencarbonat, Butylencarbonat, Dimethylcarbonat, Diethylcarbonat, Ethylmethylcarbonat, Methylpropycarbonat, Butylmethylcarbonat, Ethylpropylcarbonat, Dipropylcarbonat, Cyclopentanone, Sulfolane, Dimethylsufoxid, 3-Methyl-1,3-oxazolidine-2-on, γ-Butyrolacton, 1,2-Diethoxymethan, Tetrahydrofuran, 2-Methyltetrahydrofuran, 1,3-Dioxolan, Methylacetat, Ethylacetat, und Mischungen aus zwei oder mehr dieser aprotischen Lösungsmittel.

13. Verwendung nach einem der vorstehenden Ansprüche, **dadurch gekennzeichnet, dass** die Säure Flusssäure ist.

## Claims

1. The use of a silicon compound which contains a protonable nitrogen atom and which can be hydrolyzed by water to bind water and acid in an electrochemical cell comprising a cathode, an anode, a separator and an electrolyte, wherein said electrolyte comprises an aprotic solvent and a lithium salt as conducting salt.

2. The use according to claim 1, **characterized in that** the silicon compound comprises the structural element R1-Si-OR2, wherein R1 is an alkyl residue of from 1 to 12 carbon atoms substituted with an amino group and R2 is an alkyl residue of from 1 to 12 carbon atoms or an aromatic residue.

3. The use according to claim 1 or 2, **characterized in that** the silicon compound is of the formula R1-Si(-OR2) (-R3) (-R4), wherein R1 and R2 have the above-indicated denotation and R3 and R4 are alkyl residues independent of each other of from 1 to 12 carbon atoms or alkoxy residues of from 1 to 12 carbon atoms or aromatic residues or aryloxy residues.

4. The use according to one of claims 1 or 3, **characterized in that** the silicon compound is an (aminoalkyl) trialkoxysilane.

5. The use according to claim 4, **characterized in that** R2 is an alkyl residue of from 1 to 12 carbon atoms and R3 and R4 are alkoxy residues of from 1 to 12 carbon atoms.

6. The use according to any one of claims 1 to 5, **characterized in that** the silicon compound is selected from among the group consisting of (2-aminoethyl) trimethoxysilane, (2-aminoethyl) triethoxysilane, (2-aminoethyl) tripropoxysilane, (2-aminoethyl) tributoxysilane, (3-aminopropyl) trimethoxysilane, (3-aminopropyl) triethoxysilane, (3-aminopropyl) tripropoxysilane and (3-aminopropyl) tributoxysilane.

7. The use according to any one of claims 1 to 6, **characterized in that** the silicon compound is (3-aminopropyl) triethoxysilane or (3-aminopropyl) trimethoxysilane.

8. The use according to any one of the preceding claims, **characterized in that** the protonable nitrogen atom is part of a primary, a secondary or a tertiary amino group.

9. The use according to any one of the preceding claims, **characterized in that** the compound is contained in the electrolyte at a concentration of from 0.01 to 10 wt.-%.

10. The use according to claim 9, **characterized in that** the compound is contained in the electrolyte at a concentration of from 0.1 to 5 wt.-%.

11. The use according to any one of the preceding claims, **characterized in that** the conducting salt is selected from among the group consisting of LiPF₆, LiBF₄, LiClO₄, LiAsF₆, LiCF₃SO₃, LiN(CF₃SO₂)₂ or LiC(CF₃SO₂)₃ as well as LiSO₃CₓF₂ₓ₊₁, LiN(SO₂CₓF₂ₓ₊₁)₂, or LiC(SO₂CₓF₂ₓ₊₁)₃, wherein 0 ≤ x ≤ 8, and mixtures of two or more of said conducting salts.

12. The use according to any one of the preceding claims, **characterized in that** the solvent is selected from among the group consisting of ethylene carbonate, propylene carbonate, butylene carbonate, dimethyl carbonate, diethyl carbonate, ethylmethyl carbonate, methylpropyl carbonate, butylmethyl carbonate, ethylpropyl carbonate, dipropyl carbonate, cyclopentanone, sulfolane, dimethylsulfoxide, 3-methyl-1,3-oxazolidine-2-one, γ-butyrolactone, 1,2-diethoxymethane, tetrahydrofuran, 2-methyltetrahydrofuran, 1,3-dioxolane, methyl acetate, ethyl acetate and mixtures from two or more of said aprotic solvents.

13. The use according to any one of the preceding claims, **characterized in that** the acid is hydrofluoric acid.

## Revendications

1. Utilisation d'un composé de silicium qui possède un atome d'azote susceptible d'être protoné et qui est hydrolysable par l'eau pour fixer de l'eau et de l'acide dans une cellule électrochimique qui comprend une cathode, une anode, un séparateur et un électrolyte, l'électrolyte comprenant un solvant aprotique et un sel de lithium comme sel conducteur.

2. Utilisation selon la revendication 1, **caractérisée en ce que** le composé de silicium comporte l'élément structural R1-Si-OR2, dans lequel R1 est un radical alkyle comportant de 1 à 12 atomes de carbone, qui est substitué par un groupe amino, et R2 est un radical alkyle comportant de 1 à 12 atomes de carbone ou est un radical aromatique.

3. Utilisation selon la revendication 1 ou 2, **caractérisée en ce que** le composé de silicium présente la formule R1-Si(-OR2)(-R3)(-R4), dans laquelle R1 et R2 ont la signification spécifiée ci-dessus, et R3 et R4, indépendamment l'un de l'autre, sont des radicaux alkyles comportant de 1 à 12 atomes de carbone ou des radicaux alkoxyles comportant de 1 à 12 atomes de carbone, ou des radicaux aromatiques, ou des radicaux aryloxyles.

4. Utilisation selon l'une quelconque des revendications 1 ou 3, **caractérisée en ce que** le composé de silicium est un (aminoalkyl)-trialcoxysilane.

5. Utilisation selon la revendication 4, **caractérisée en ce que** R2 est un radical alkyle comportant de 1 à 12 atomes de carbone et **en ce que** R3 et R4 sont des radicaux alcoxyles comportant de 1 à 12 atomes de carbone.

6. Utilisation selon l'une quelconque des revendications 1 à 5, **caractérisée en ce que** le composé de silicium est choisi parmi le groupe constitué par le (2-aminoéthyl)-triméthoxysilane, le (2-aminoéthyl)-triéthoxysilane, le (2-aminoéthyl)-tripropoxysilane, le (2-aminoéthyl)-tributoxysilane, le (3-aminopropyl)-triméthoxysilane, le (3-aminopropyl)-triéthoxysilane, le (3-aminopropyl)-tripropoxysilane et le (3-aminopropyl)-tributoxysilane.

7. Utilisation selon l'une quelconque des revendications 1 à 6, le composé de silicium étant du (3-aminopropyl)-triéthoxysilane ou du (3-aminopropyl)-triméthoxysilane.

8. Utilisation selon l'une quelconque des revendications précédentes, **caractérisée en ce que** l'atome d'azote susceptible d'être protoné fait partie d'un groupe amino primaire, secondaire ou tertiaire.

9. Utilisation selon l'une quelconque des revendications précédentes, **caractérisée en ce que** le composé est contenu dans l'électrolyte en une concentration de 0,01 à 10 % en poids.

10. Utilisation selon la revendication 9, **caractérisée en ce que** le composé est contenu dans l'électrolyte en une concentration de 0,1 à 5 % en poids.

11. Utilisation selon l'une quelconque des revendications précédentes, **caractérisée en ce que** le sel conducteur est choisi parmi le groupe constitué par le LiPF₆, le LiBF₄, le LiClO₄, le LiAsF₆, le LiCF₃SO₃, le LiN(CF₃SO₂)₂ ou le LiC(CF₃SO₂)₃, ainsi que les LiS0₃CₓF₂ₓ₊₁, LiN(SO₂CₓF₂ₓ₊₁)₂ ou LiC (SO₂CₓF₂ₓ₊₁)₃ avec 0 ≤ x ≤ 8, et des mélanges de deux ou plusieurs de ces sels conducteurs.

12. Utilisation selon l'une quelconque des revendications précédentes, **caractérisée en ce que** le solvant est choisi parmi le groupe constitué par le carbonate d'éthylène, le carbonate de propylène, le carbonate de butylène, le carbonate de diméthyle, le carbonate de diéthyle, le carbonate d'éthyle et de méthyle, le carbonate de méthyle et de propyle, le carbonate de butyle et de méthyle, le carbonate d'éthyle et de propyle, le carbonate de dipropyle, la cyclopentanone, le sulfolane, le diméthylsulfoxyde, la 3-méthyl-1,3-oxazolidine-2-one, la γ-butyrolactone, le 1,2-diéthoxyméthane, le tétrahydrofurane, le 2-méthyl-tétrahydrofurane, le 1,3-dioxolane, l'acétate de méthyle, l'acétate d'éthyle et des mélanges de deux ou plusieurs de ces solvants aprotiques.

13. Utilisation selon l'une quelconque des revendications précédentes, **caractérisée en ce que** l'acide est de l'acide fluorhydrique.
